Europäisches Patentamt

(19) **European Patent Office**

Office européen des brevets

(11) Numéro de publication: **0 058 617**
**B1**

(12) # FASCICULE DE BREVET EUROPEEN

(45) Date de publication du fascicule du brevet:
31.07.85

(51) Int. Cl.⁴: **B 62 B 7/08**

(21) Numéro de dépôt: **82400251.3**

(22) Date de dépôt: **12.02.82**

(54) **Poussette pliante réversible pour enfant.**

(30) Priorité: **13.02.81 FR 8102878**
**24.06.81 FR 8112404**

(43) Date de publication de la demande:
**25.08.82 Bulletin 82/34**

(45) Mention de la délivrance du brevet:
**31.07.85 Bulletin 85/31**

(84) Etats contractants désignés:
**AT BE CH DE FR GB IT LI LU NL SE**

(73) Titulaire: **AMPAFRANCE S.A., 119, Rue de Paris,
F-92107 Boulogne-Billancourt Cedex (FR)**

(72) Inventeur: **Surot, Patrick, "Le Tremblay" Chemin de la
Boulinière, F-49300 Cholet (FR)**

(74) Mandataire: **Dost, Wolfgang, Dr.rer.nat., Dipl.-Chem. et
al, Patent- und Rechtsanwälte
Pagenberg-Dost-Altenburg & Partner Galileiplatz 1,
D-8000 München 80 (DE)**

(56) Documents cités:
**FR - A - 2 259 001
FR - A - 2 406 555
FR - A - 2 458 443
FR - A - 2 486 894
GB - A - 1 516 828**

BUNDESDRUCKEREI BERLIN

**Description**

La présente invention se rapporte à une poussette pliante réversible pour enfant.

On connaît des poussettes dites »parapluies« dans lesquelles une tige centrale coulissante permet d'obtenir un repliement et un déploiement de pieds porteurs de roues.

On connait aussi, par le document FR-A-2 458 443, une poussette qui peut être pliée et dépliée dans le sens de déplacement de celle-ci, cette poussette étant réversible et comportant un châssis pliant muni de bras de poussée et de commande qui portent des branches équipées de roues, une nacelle étant supportée par le châssis et pouvant basculer de manière réglable par rapport à celui-ci de manière à pouvoir occuper une position »face à la mère« et une position »face à la route«.

Dans cette poussette connue, la réversibilité est donc obtenue par un basculement de la nacelle surelle-même, le bras de poussée restant en position.

L'invention a pour but de fournir une poussette pliante du type »parapluie« ci-dessus qui différemment, soit réversible par le basculement des bras de poussée, la nacelle restant en position.

Par rapport au FR pricité qui décrit diga une pousselle pliante du type para pluie, réversible soit dans une position »face mére«, soit dans une position »face route«, comportant une nacelle et, de chaque côté de celle-ci, un bras de poussée et de commande et des branches porteuses de roues, la prisente invention est caractérisée en ce qu'elle comporte en outre, de chaque côté de la nacelle, une noix basculante sur laquelle sont articulées les branches porteuses de roues et qui est traversée de façon coulissante par le bras de poussée et de commande, et un embiellage reliant chaque bras coulissant auxdites branches, de sorte que, suivant le basculement imprimé aux noix par lesdits bras coulissants, on obtient un déploiement et un verrouillage de la poussette soit dans la position »face mère«, soit dans la position »face route«.

Chaque noix présente, pour chaque branche, une gorge de réception et de verrouillage de celle-ci au voisinage de son articulation.

L'embiellage est constitué de fourchettes articulées auxdites branches, articulées entre elles en compas et se trouvant dans l'alignement l'une de l'autre dans la position »face mére« comme dans la position »face route« et une bielle reliant lesdites fourchettes et ledit bras de poussée et de commande.

Suivant une forme particulière de réalisation, le montage de la poussette est amélioré en prévoyant une bielle à rainure traversée par l'axe de son articulation avec le bras de poussée, transformant sa course en un mouvement combiné simultané de soulèvement et d'inclinaison, cette inclinaison se faisant soit dans le sens »face mère«, soit dans le sens »face route«, suivant le choix.

Ceci se traduit également par un abaissement des points d'articulation des fourchettes sur les branches, qui est mis à profit en attribuant à au moins l'une des fourchettes une fonction de marchepied, le nieveau de ces fourchettes alignées étant suffisamment bas.

Sur chaque noix est également monté, de façon pivotante, un longeron de support du hamac ou nacelle, lequel longeron est réglable en position.

Les longerons de support du hamac ou de la nacelle peuvent recevoir un »couchage« constitué par un, deux ou trois éléments, à savoir: un duvet; un duvet et une capote; un duvet, une capote et une »chaussette«.

D'autres caractéristiques et avantages de la présente invention ressortiront de la description qui va suivre faite en regard des dessins annexés sur lesquels:

la figure 1 est une vue en élévation latérale d'un côté de la poussette en position repliée;

la figure 2 est une vue en élévation latérale et en partie éclatée du même côté de la poussette, en cours de déploiement de l'ensemble et de basculement de la noix dans un des deux sens de basculement possibles;

la figure 3 est une vue en élévation latérale partielle du côté considéré de la poussette, le basculement étant achevé pour obtenir la position »face route«, le support de hamac ayant été enlevé pour la clarté du dessin;la figure 4 est une vue semblable à la figure 3, à la différence que le côté de poussette y est représenté en position »face mère«;

la figure 5 est une vue schématique en perspective de la poussette repliée à plat, montrant, de part et d'autre du hamac ou nacelle, ses deux côtés reliés par des entretoises;

les figures 6, 7 et 8 sont des vues en perspective de la même poussette avec des accessoires différents de couchage;

la figure 9 est une vue en élévation latérale partielle d'un côté considéré d'une autre forme de réalisation de poussette selon l'invention; le basculement étant achevé pour obtenir la position »face mère«; le support de hamac étant limité à l'un de ses longerons pour la clarté du dessin; et

la figure 10 est une vue éclatée de moyens de réglage en position d'un longeron de hamac.

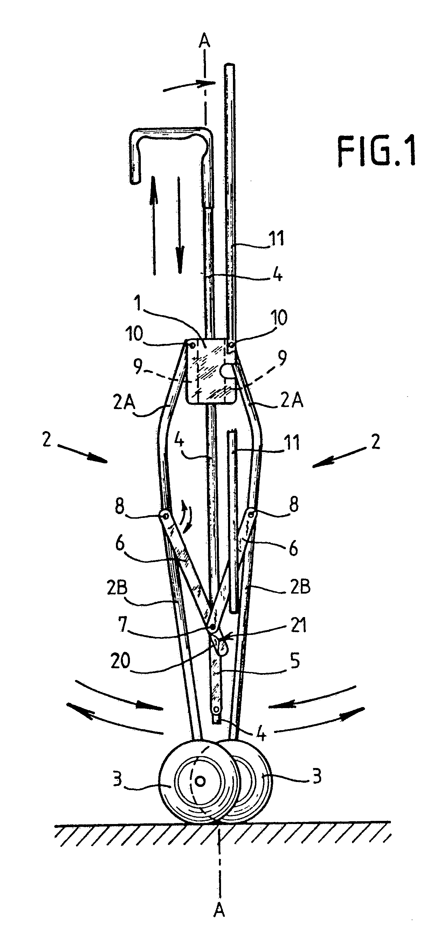

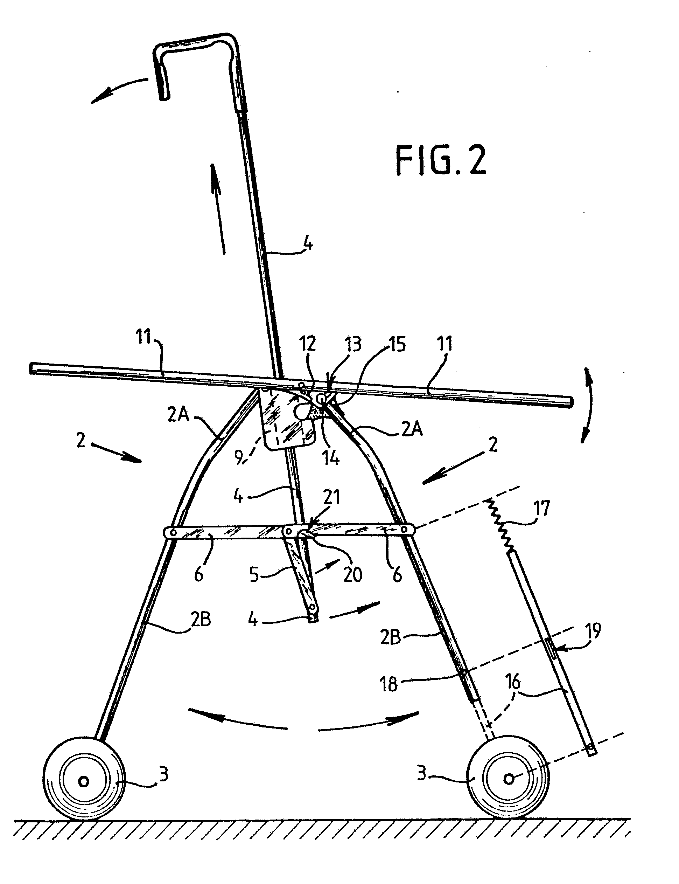

Dans la forme de réalisation représentée aux figures 1 à 8, chaque côté de la poussette selon l'invention est constitué par une noix basculante (1) sur laquelle sont articulées des branches (2), chacune porteuse d'une roue (3). La noix basculante (1) est, par ailleurs, traversée par un bras de poussée (4) susceptible de coulisser dans ladite noix pour commander le repliement ou le déploiement des branches (2). A cet effet, le bras de poussée (4) est relié par une bielle (5) à deux fourchettes (6) articulées en compas en (7) sur cette bielle et chacune articulée en (8) sur l'une des deux branches (2).

La noix (1) présente, de part et d'autre, du bras coulissant (4), une gorge (9) de réception et de verrouillage par action de clip de l'une des branches (2) articulée chacune en (10) au voisinage de l'une des extrémités de la gorge de réception (9).

Chaque branche est galbée de manière à présenter une portion (2A) susceptible d'être reçue dans l'une des gorges (9) et une portion (2B) portant la roue (3) et se rapprochant de l'axe médian (A-A) de la poussette quand celle-ci est repliée, de manière à obtenir un encombrement le plus faible possible de la poussette dans cette position.

La noix (1), de chaque côté de la poussette, porte, de manière pivotante, un longeron (11) destiné à recevoir le hamac ou la nacelle et, d'une manière générale, le »couchage« recevant l'enfant.

Le pivot du longeron (11), dans la forme de réalisation représentée, se confond avec l'axe d'articulation de l'une des deux branches (2). La position du longeron par rapport à la noix peut être réglée à l'aide d'un secteur (12) à lumière arquée (13) recevant un axe (14) traversant l'une des branches (2) et susceptible d'être serré à l'aide d'un écrou papillon (15).

Les branches (2), dans leur partie (2B), peuvent être suspendues télescopiquement. A cet effet, une tige (16) portant la roue (3) est susceptible de coulisser dans la portion (2B) de la branche, à l'encontre d'un ressort (17) disposé entre un point d'appui fixe et la tige (16). La course de la tige est limitée par un ergot (18) pénétrant dans une lumière (19) de la tige (16).

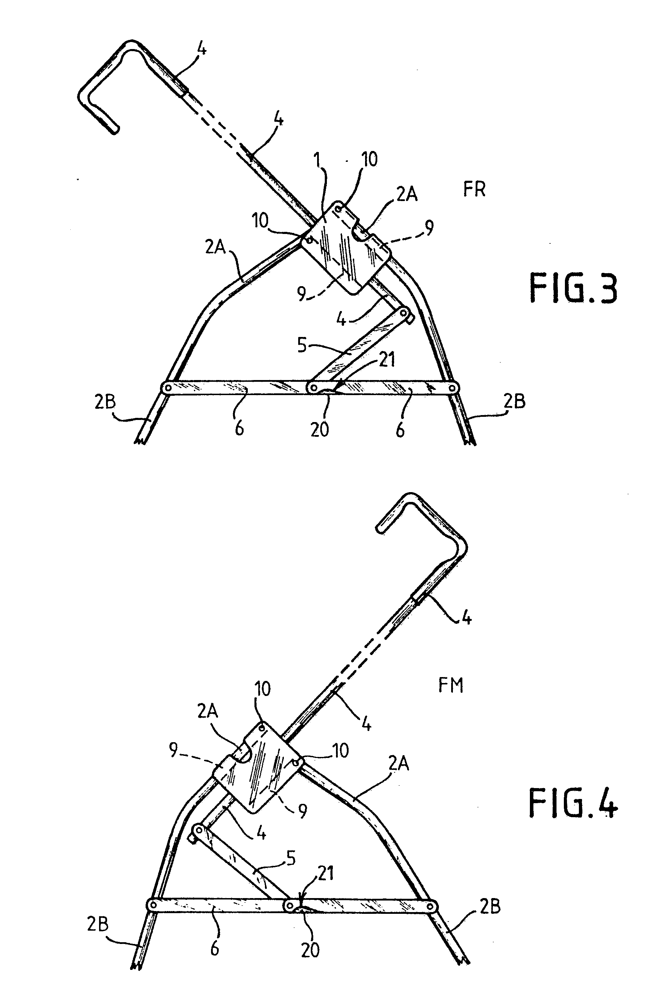

Dans les positions »face mère« (FM) et »face route« (FR) la portion (2A) de l'une des branches (2) est reçue dans la gorge (9) correspondante de la noix (1) (figures 3 et 4). Dans l'une et l'autre positions, les fourchettes (6) articulées en compas se trouvent dans l'alignement l'une de l'autre et maintenues dans cet état grâce à un bossage (20) de l'une des fourchettes pénétrant dans une encoche (21) de l'autre fourchette.

Suivant une forme de réalisation, des entretoises rigides (22) relient les deux côtés de poussette, considérés de part et d'autre du hamac, nacelle ou couchage.

Suivant une autre forme de réalisation, les entretoises (22) sont pliantes et peuvent comprendre des »X« articulés, d'où un repliement et un déploiement transversaux possibles pour obtenir un pliage dit en fagot.

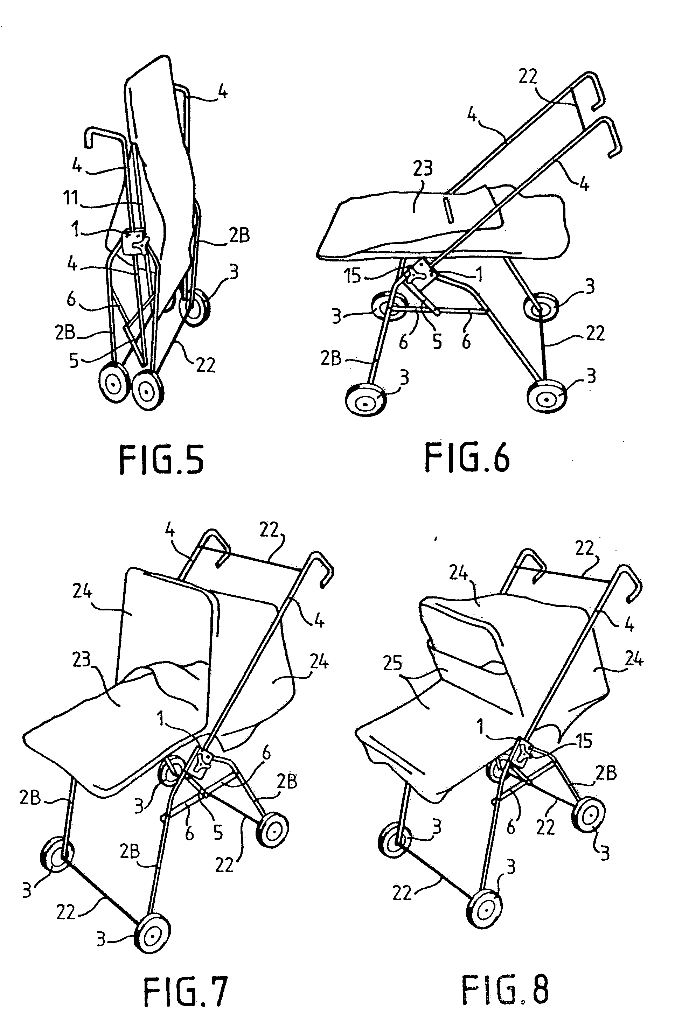

Le »couchage« peut être constitué par un duvet (23) (figure 6) ou par la combinaison d'un duvet (23) et d'une capote (24) (figure 7) ou encore par la combinaison d'un duvet (23), d'une capote (24) et d'une »chaussette« ou étui protecteur (25).

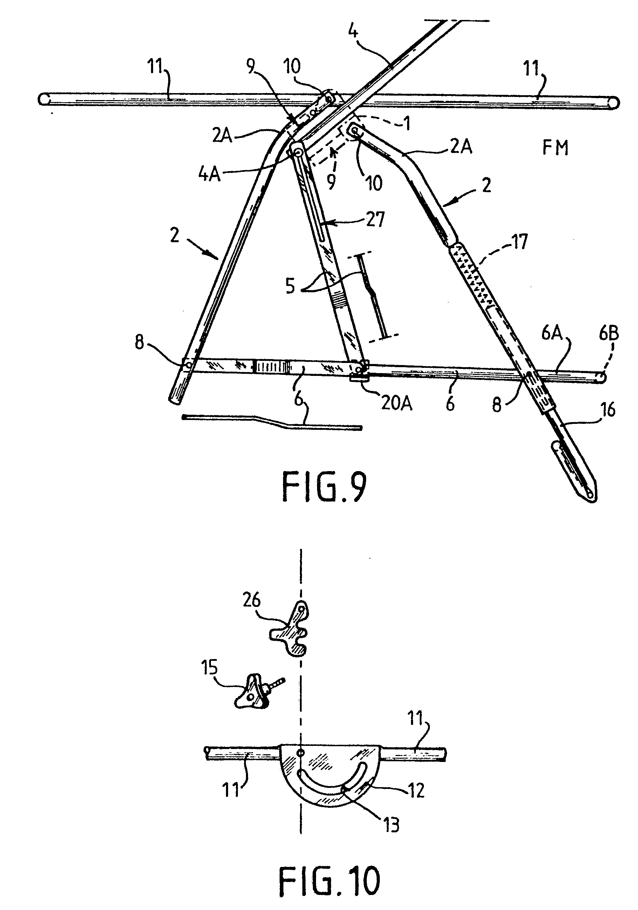

On retrouve dans la forme de réalisation représentée à la figure 9 des noix basculantes (1) sur lesquelles sont articulées des branches (2). Chaque noix basculante (1) est traversée par un bras de poussée (4) susceptible de coulisser dans ladite noix pour commander le repliement ou le déploiement des branches (2).

Chaque bras de poussée (4) est relié par une bielle (5) à deux fourchettes (6) articulées en compas en (7) sur cette bielle et chacune articulée en (8) sur l'une des deux branches (2) et chaque noix (1) présente, de part et d'autre du bras coulissant (4), une gorge (9) de réception et de verrouillage par action de clip, de l'une des branches (2) articulée chacune en (10) au voisinage de l'une des extrémités de la gorge de réception.

Conformément à cette autre forme de réalisation, la bielle (5) présente une rainure de coulisse (27) traversée par l'axe (4A) de son articulation avec le bras de poussée (4). Au déploiement, la course de la bielle résulte d'un mouvement combiné de soulèvement et d'inclinaison, cette inclinaison se faisant soit dans le sens »face mère«, soit dans le sens »face route« suivant le choix. Bien entendu, le mouvement est inversé au repliement.

Dans les positions »face mère« (FM) et »face route« (FR) la portion (2A) de l'une des branches (2) est reçue dans la gorge (9) correspondante de la noix (1) et, dans l'une et l'autre positions, les fourchettes (6), articulées en compas, se trouvent dans l'alignement l'une de l'autre et maintenues dans cet état grâce à une équerre (20A) de l'une des fourchettes.

L'articulation à coulisse de la bielle (5) sur le bras de poussée (4) permet d'avoir des points d'articulation (8) des fourchettes (6) sur les branches du piètement beaucoup plus bas que dans les autres formes de réalisation. Cette disposition permet également de faire remplir aux fourchettes un rôle de marchepied. Sur la figure 9, l'une de ces fourchettes est prolongée en (6A) à l'extérieur du piètement et rejoint par une entretoise (6B) la fourchette (non représentée) qui lui est symétrique sur l'autre côté de la poussette.

La noix (1), de chaque côté de la poussette, porte, de manière pivotante, un longeron (11) destiné à recevoir le hamac ou la nacelle et, d'une manière générale, le »couchage« recevant l'enfant.

Le pivot du longeron (11), dans la forme de réalisation représentée, se confond avec l'axe d'articulation de l'une des deux branches (2) et la position du longeron par rapport à la noix peut être réglée à l'aide d'un secteur (12) à lumière arquée (13) recevant un axe traversant l'une des branches (2) et susceptible d'être serré à l'aide d'un écrou papillon (15) l'ensemble comportant une sécurité (26).

Les branches (2) peuvent être suspendues télescopiquement (montage 16—17).

**Revendications**

1. Poussette pliante pour enfant, du type »parapluie«, permettant d'obtenir un repliement et un déploiement dans le sens de déplacement de la poussette, et réversible soit dans une position »fare mère«, soit dans une position »face route«, comportant une nacelle (11, 23, 24, 25) et, de chaque côté de celle-ci, un bras de poussée et de commande (4) et des branches (2) porteuses de roues (3), caractérisée en ce qu'elle comporte, de chaque côté de la nacelle, une noix basculante (1) sur laquelle sont articulées les branches (2) porteuses de roues, et qui est traversée de façon coulissante par le bras de poussée et de commande (4), et un embiellage (5, 6) reliant chaque bras coulissant (4) auxdites branches (2), de sorte que, suivant le basculement imprimé aux noix (1), par lesdits bras coulissants (4), on obtient un déploiement et un verrouillage de la poussette soit dans la position »face mère«, soit dans la position »face route«.

2. Poussette selon la revendication 1, caractérisée en ce que chaque noix (1) présente pour chaque branche (2) une gorge (9) de réception et de verrouillage de celle-ci, au voisinage de son articulation (10) avec la noix (1).

3. Poussette selon la revendication 2, caractérisée en ce que chaque branche (2) est galbée de manière à présenter une portion (2A) susceptible d'être reçue dans l'une des gorges (9) et une portion (2B) portant la roue (3) et se rapprochant de l'axe médian (A-A) de la poussette quand celle-ci est repliée.

4. Poussette selon l'une quelconque des revendications 1 à 3, caractérisée en ce que l'embiellage (5, 6) comprend des fourchettes (6) articulées auxdites branches (2) articulées entre elles en compas et se trouvant dans l'alignement l'une de l'autre dans la position »face mère« comme dans la position »face route«, et une bielle (5) reliant lesdites fourchettes et ledit bras (4) de poussée et de commande.

5. Poussette selon la revendication 4, caractérisée en ce qu'un moyen de blocage (20, 21) permet de maintenir les fourchettes (6) dans l'alignement l'une de l'autre lorsque la poussette est déployée.

6. Poussette selon l'une des revendications 4 et 5, caractérisée en ce que la bielle (5) est articulée en deux points respectivement sur le bras (4) et sur les fourchettes (6).

7. Poussette selon l'une quelconque des revendications 1 à 5, caractérisée en ce qu'une rainure de coulisse (27) est prévue sur la bielle (5) dans son articulation avec le bras de poussée (4) de sorte que, au déploiement, la course de la bielle est transformée en un mouvement combiné simultané de soulèvement et d'inclinaison, cette inclinaison se faisant soit dans le sens »face mère«, soit dans le sens »face route«, suivant le choix.

8. Poussette selon la revendication 7, caractérisée en ce que la coulisse (27) de la bielle (5) permet de placer les points d'articulation (8) des fourchettes (6) avec les branches (2) du piètement dans une position plus basse que celle obtenue dans la réalisation selon la revendication 6, et en ce qu'au moins l'une des fourchettes remplit une fonction de marchepied.

9. Poussette selon la revendication 8, caractérisée en ce que la fourchette (6) considérée sur l'un des côtés de la poussette est prolongée (6A) à l'extérieur du piètement et rejoint par une entretoise (6B) la fourchette qui lui est symétrique sur l'autre côté de la poussette.

10. Poussette selon l'une quelconque des revendications 1 à 9, caractérisée en ce que les branches (2) sont suspendues télescopiquement sur ressort (17).

11. Poussette selon l'une quelconque des revendications 1 à 10, caractérisée en ce que des entretoises rigides (22) relient les deux côtés de poussette considérés, de part et d'autre du hamac, nacelle ou couchage.

12. Poussette selon l'une quelconque des revendications 1 à 10, caractérisée en ce que des entretoises pliantes relient les deux côtés de poussette considérés, pour un pliage en fagot.

13. Poussette selon l'une quelconque des revendications 1 à 12, caractérisée en ce que la noix (1), de chaque côté de la poussette, porte, de manière pivotante, un longeron (11) destiné à recevoir le hamac ou la nacelle et, d'une manière générale, le couchage recevant l'enfant.

14. Poussette selon la revendication 13, caractérisée en ce qu'un dispositif de réglage (12, 13, 14) permet de régler la position du longeron (11) par rapport à la noix (1).

15. Poussette selon la revendication 14, caractérisée en ce que le dispositif de réglage est constitué par une pièce (12) à lumière arquée (13) recevant un axe (14) traversant l'une des branches (2) et susceptible d'être serré à l'aide d'un écrou (15).

16. Poussette selon l'une quelconque des revendications 1 à 15, caractérisée en ce que le couchage est constitué, soit par un duvet (23), soit par un duvet (23) et une capote (24), soit par un duvet (23), une capote (24) et une »chaussette« (25).

## Patentansprüche

1. Zusammenklappbarer Kinderwagen der Art »Regenschirm«, der erlaubt, ein Zusammenfalten und ein Entfalten in dem Sinn eines Umsetzens des Kinderwagens zu erhalten und der umsteuerbar ist entweder in eine Position »Gesicht zur Mutter« oder in eine Position »Gesicht in Fahrtrichtung«, der eine Gondel (11, 23, 24, 25) und auf jeder Seite dieser Gondel einen Stoß- und Betätigungsarm (4) und Beine (2), die Räder (3) tragen, aufweist, dadurch gekennzeichnet, daß er auf jeder Seite der Gondel ein kippbares Stück (1) aufweist, mit dem die Beine (2) gelenkig verbunden sind, die Räder tragen, und von dem Stoß- und Betätigungsarm (4), daß es in einer verschiebbaren Weise durchquert ist, und ein Gestänge (5, 6), das jeden verschiebbaren Arm (4) mit Beinen (2) verbindet, derart, daß man gemäß des eingeprägten Kippens des Stücks (1), durch die verschiebbaren Arme (4), ein Entfalten und ein Festsetzen des Kinderwagens entweder in der Position »Gesicht zur Mutter« oder in der Position »Gesicht in Fahrtrichtung« erhält.

2. Kinderwagen gemäß Anspruch 1, dadurch gekennzeichnet, daß jedes Stück (1) für jedes Bein (2) eine Aufnahme- und Festsetzungsnut (9) aufweist, in der Nachbarschaft seines Gelenks (10) mit dem Stück (1).

3. Kinderwagen gemäß Anspruch 2, dadurch gekennzeichnet, daß jedes Bein (2) in einer Art ausgeformt ist, daß es einen Teil (2A) aufweist, der geeignet ist, in einer der Nuten (9) aufgenommen zu werden, und einen Teil (2B), der das Rad (3) trägt, und sich der Mittelachse (A-A) des Kinderwagens annähert, wenn dieser zusammengefaltet wird.

4. Kinderwagen gemäß einem der Ansprüche 1 bis 3, dadurch gekennzeichnet, daß das Gestänge (5, 6) Gabeln (6) aufweist, die mit den Beinen (2) gelenkig verbunden sind, die unter sich in Zirkelform gelenkig verbunden sind und die sich in Ausrichtung zueinander befinden, sowohl in der Position »Gesicht zur Mutter« als auch in der Position »Gesicht in Fahrtrichtung«, und eine Stange (5), die die Gabeln und den Stoß- und Antriebsarm (4) verbinden.

5. Kinderwagen gemäß Anspruch 4, dadurch gekennzeichnet, daß eine Blockiereinrichtung (20, 21) eine Ausrichtung der Gabeln (6) zueinander ermöglicht, während der Kinderwagen ausgebreitet wird.

6. Kinderwagen gemäß einem der Ansprüche 4 und 5, dadurch gekennzeichnet, daß die Stange (5) an zwei Punkten gelenkig verbunden ist mit dem Arm (4) bzw. den Gabeln (6).

7. Kinderwagen gemäß einem der Ansprüche 1 bis 5, dadurch gekennzeichnet, daß ein Schiebeschlitz (27) in der Stange (5) in seiner Gelenkverbindung mit dem Stoßarm (4) vorgesehen ist, derart, daß beim Auseinanderfalten der Weg der Stange transformiert wird in eine kombinierte gleichzeitige Bewegung des Anhebens und der Neigung, wobei diese Neigung entweder in die Richtung »Gesicht zur Mutter« oder in die Richtung »Gesicht in Fahrtrichtung« erfolgt, je nach Wahl.

8. Kinderwagen gemäß Anspruch 7, dadurch gekennzeichnet, daß der Schiebeschlitz (27) der Stange (5) es erlaubt, die Gelenkpunkte (8) der Gabeln (6) mit den Beinen (2) des Gestells in eine niedrigere Position zu plazieren als die, die man erhält in einer Ausführungsform gemäß Anspruch 6, und dadurch, daß mindestens eine der Gabeln die Funktion eines Trittbretts erfüllt.

9. Kinderwagen gemäß Anspruch 8, dadurch gekennzeichnet, daß die Gabel (6), die auf einer Seite des Kinderwagens betrachtet wird, am äußeren Endpunkt des Gestells verlängert ist (6A) und über einen Querträger (6B) die Gabel, die selbst symmetrisch ist mit der anderen Seite des Kinderwagens wieder verbindet.

10. Kinderwagen gemäß einem der Ansprüche 1 bis 9, dadurch gekennzeichnet, daß die Beine (2) teleskopartig an einer Feder (17) aufgehängt sind.

11. Kinderwagen gemäß einem der Ansprüche 1 bis 10, dadurch gekennzeichnet, daß starre Querträger (22) die beiden betrachteten Seiten des Kinderwagens beidseitig der Hängematte, der Gondel oder des Schlafsacks verbinden.

12. Kinderwagen gemäß einem der Ansprüche 1 bis 10, dadurch gekennzeichnet, daß faltbare Querträger die beiden betrachteten Seiten des Kinderwagens für eine Zusammenfaltung nach Art eines Reisigbündels verbinden.

13. Kinderwagen gemäß einem der Ansprüche 1 bis 12, dadurch gekennzeichnet, daß das Stück (1) auf jeder Seite des Kinderwagens in einer drehbaren Art einen Längsträger (11) zur Aufnahme der Hängematte oder der Gondel und in einer allgemeinen Art des Schlafsacks, der das Kind aufnimmt, trägt.

14. Kinderwagen gemäß Anspruch 13, dadurch gekennzeichnet, daß eine Einstelleinrichtung (12, 13, 14) es erlaubt, die Position des Querträgers (11) im Verhältnis zu dem Stück (1) einzustellen.

15. Kinderwagen gemäß Anspruch 14, dadurch gekennzeichnet, daß die Einstelleinrichtung ein Teil (12) mit einem bogenförmigen Schlitz (13) aufweist, der eine Achse (14) aufnimmt, die eine der Beine (2) durchquert und mit Hilfe einer Mutter (45) festklemmbar ist.

16. Kinderwagen gemäß einem der Ansprüche 1 bis 15, dadurch gekennzeichnet, daß der Schlafsack gebildet wird entweder aus einem Federbett (23), einem Federbett (23) und einer Rekgenschutzhaube (24) oder einem Federbett (23), einer Regenschutzhaube (24) und einem Fußsack (25).

**Claims**

1. A folding pushchair for a child, of the »umbrella« type, providing for folding and unfolding movement in the direction of movement of the pushchair und being reversible either in a position of »facing mother« or in a forward facing position, comprising a child-accommodating body (11, 23, 24, 25) and, on each side thereof, a pushing and control arm (4) and legs (2) carrying wheels (3) characterised in that, on each side of the child-accommodating body, it comprises a pivotal carrier (1) to which the wheel-carrying legs (2) are pivoted and through which slidably passes the pushing and control arm (4), and a strut assembly (5, 6) connecting each sliding arm (4) to said legs (2) so that, in accordance with the pivotal movement imparted to the carriers (1) by said sliding arms (4), the pushchair is unfolded and locked either in the position of »facing mother« or in the forwart facing position.

2. A pushchair according to claim 1 characterised in that for each leg (2) each carrier (1) has a groove (9) for receiving and locking said leg, in the vicinity of its pivot connection (10) to the carrier (1).

3. A pushchair according to claim 2 characterised in that each leg (2) is curved so as to provide a portion (2A) which is capable of being received in one of the grooves (9) and a portion (2B) carrying the wheel (3) and moving towards the central axis (A-A) of the pushchair when the pushchair is folded.

4. A pushchair according to any one of claims 1 to 3 characterised in that the strut assembly (5, 6) comprises forks (6) pivotally connected to said legs (2) pivotally connected together in a compasslike structure and being disposed in a position of alignment with each other in the position of »facing mother« and in the forward facing position, and a strut (5) connecting said forks and said pushing and control arm (4).

5. A pushchair according to claim 4 characterised in that a blocking means (20, 21) permits the forks (6) to be maintained in a position of alignment with each other when the pushchair is unfolded.

6. A pushchair according to one of claims 4 and 5 characterised in that the strut (5) is pivoted at two points respectively to the arm (4) and to the forks (6).

7. A pushchair according to any one of claims 1 to 5 characterised in that a slide slot (27) is provided on the strut (5) in its pivot connection to the pushing arm (4) in such a way that, when the pushchair is unfolded, the travel movement of the strut is transformed into a combined simultaneous raising and inclining movement, the inclination being either in the »facing mother« direction or in the »forward facing« direction, according to choice.

8. A pushchair according to claim 7 characterised in that the slide means (27) of the strut (5) permits the points of pivotal connection (8) of the forks (6) to the legs (2) of the support structure to be in a lower position than that achieved in the construction according to claim 6, and that at least one of the forks performs a footrest function.

9. A pushchair according to claim 8 characterised in that the fork (6) in question on one of the sides of the pushchair ist extended (6A) outwardly of the support sturcture and is connected by a cross member (6B) to the fork which is symmetrical with respect thereto on the other side of the pushchair.

10. A pushchair according to any one of claims 1 to 9 characterised in that the legs (2) are telescopically supported on springs (17).

11. A pushchair according to any one of claims 1 to 10 characterised in that rigid cross members (22) connect the two sides of the pushchair in question, on respective sides of the hammock, accomodating body or bed.

12. A pushchair according to any one of claims 1 to 10 characterised in that folding cross members connect the two sides of the pushchair in question, for folding into bundle-like form.

13. A pushchair according to any one of claims 1 to 12 characterised in that, on each side of the pushchair, the carrier (1) pivotally carries a longitudinal member (11) which is intended to receive the hammock or the accommodating body and generally the bedding for receiving the child.

14. A pushchair according to claim 13 characterised in that an adjusting means (12, 13, 14) permits the position of the longitudinal member (11) to be adjusted with respect to the carrier (1).

15. A pushchair according to claim 14 characterised in that the adjusting means comprises a member (12) having a arcuate aperture (13) receiving a spindle (14) passing through one of the legs (2) and capable of being tightened by means of a nut (15).

16. A pushchair according to any one of claims 1 to 15 characterised in that the bedding comprises either a duvet (23) or a duvet (23) and a hood (24), or a duvet (23), a hood (24) and a protective apron cover (25).

FIG.1

FIG.2

FIG.3

FIG.4

FIG.5

FIG.6

FIG.7

FIG.8

FIG.9

FIG.10